# EUROPÄISCHE PATENTANMELDUNG

(11) **EP 4 749 559 A1**
(43) Veröffentlichungstag der Anmeldung: **27.05.2026**
(21) Anmeldenummer: 25218347.0
(22) Anmeldetag: 25.11.2025
(51) Int. Cl.: G06Q 40/08, G08B 21/10, G08B 31/00

(54) **VERFAHREN ZUR ORTSABHÄNGIGEN ERMITTLUNG UND/ODER ABSCHÄTZUNG EINES EINTRITTS UND/ODER AUSMASSES VON SCHADENSEREIGNISSEN AUFGRUND VON NIEDERSCHLÄGEN**

(30) Priorität: 26.11.2024 AT 5017624 U
(71) Anmelder: UBIMET GmbH, 1220 Wien (AT)
(72) Erfinder: FASSNAUER, Michael, 1160 Wien (AT); BLÜMMEL, Andreas, 1190 Wien (AT)
(74) Vertreter: Burger, Hannes Alfred

(57) **Zusammenfassung**

Die Erfindung betrifft ein Verfahren zur Ermittlung und/oder Abschätzung eines Eintritts und/oder Ausmaßes von Schadensereignissen (2) aufgrund von Niederschlägen, umfassend die Schritte:
(a) Bereitstellung eines ersten Datensatzes (11), wobei der erste Datensatz (11) Niederschlagsdaten umfasst, wobei die Niederschlagsmengen zumindest teilweise aus einem Zeitraum in der Vergangenheit stammen;
(b) Bereitstellung eines zweiten Datensatzes (12), wobei der zweite Datensatz (12) bodenbezogene und/oder orographische Daten umfasst;
(c) Bereitstellung eines dritten Datensatzes (13), wobei der dritte Datensatz (13) Schadensereignis-Daten über in der Vergangenheit eingetretene Schadensereignisse umfasst;
(d) Zusammenführen des ersten Datensatzes (11), des zweiten Datensatzes (12) und des dritten Datensatzes (13), wobei unter Anwendung eines Algorithmus (5) aus den Niederschlagsdaten des ersten Datensatzes (11) und den bodenbezogenen und/oder orographischen Daten des zweiten Datensatzes (12) und in Abhängigkeit der Schadensereignis-Daten des dritten Datensatzes (13) ortsabhängig der Eintritt und/oder das Ausmaß eines Schadensereignisses (2) ermittelt und/oder eine Wahrscheinlichkeit für den Eintritt und/oder ein Ausmaß eines Schadensereignisses (2) berechnet wird.

## Beschreibung

Die Erfindung betrifft ein Verfahren zur ortsabhängigen und/oder zeitabhängigen Ermittlung und/oder Abschätzung eines Eintritts und/oder Ausmaßes von Schadensereignissen aufgrund von Niederschlägen, insbesondere Überflutungen, Erdrutschen und/oder Muren, in einem Untersuchungsgebiet mittels eines Datenverarbeitungssystems mit zumindest einer Datenverarbeitungsvorrichtung.

In zunehmendem Maße werden die Folgen von niederschlagsbedingten Naturkatastrophen und extremen Wetterereignissen, insbesondere (lokale) Starkniederschläge, für direkt Betroffene sowie auch am Rande Beteiligte zu einem ernstzunehmenden Thema. Dazu zählt sowohl der Schutz der Bevölkerung während und unmittelbar nach einem durch Niederschlag verursachten Schadensereignis als auch die Beseitigung der Schäden einschließlich der nachfolgenden Schadensabwicklung durch Versicherungsgesellschaften. Aus diesem Grund besteht der Bedarf, solche Schadensereignisse vorherzusagen bzw. einem bestimmten räumlichen Gebiet zuzuordnen. Auf diese Weise kann einerseits die betroffene Bevölkerung rechtzeitig gewarnt werden und können andererseits geeignete Maßnahmen getroffen werden, um Schadensereignisse abzuwenden oder zumindest deren Ausmaß möglichst gering zu halten. Ein weiterer Aspekt besteht darin, dass die Schadensabwicklung erleichtert und zuverlässiger gestaltet werden kann, indem gemeldete Schäden bzw. deren Ausmaß auf Plausibilität geprüft werden können.

Im Stand der Technik gibt es bislang kein zuverlässiges Verfahren, mit dem eine ortsabhängige Ermittlung und/oder Abschätzung eines Eintritts und/oder Ausmaßes von Schadensereignissen aufgrund von Niederschlägen, insbesondere Über-flutungen, Erdrutschen und/oder Muren erfolgen kann.

Aufgabe der vorliegenden Erfindung war es, die Nachteile des Standes der Technik zu überwinden und ein Verfahren sowie ein Datenverarbeitungssystem zur Verfügung zu stellen, mittels derer auf einfache und zuverlässige Weise der Eintritt und/oder das Ausmaß von Schadensereignissen aufgrund von Niederschlägen ermittelt bzw. abgeschätzt werden kann.

Diese Aufgabe wird durch ein Verfahren, einen Algorithmus, ein Datenverarbeitungssystem und ein Computerprogrammprodukt gemäß den Ansprüchen gelöst.

Das erfindungsgemäße Verfahren umfasst die Schritte:
(a) Bereitstellung zumindest eines ersten Datensatzes im Datenverarbeitungssystem, wobei der zumindest eine erste Datensatz - aus Messungen gewonnene - Niederschlagsdaten mit Niederschlagsmengen, die jeweils geographischen Positionsdaten innerhalb des Untersuchungsgebietes zugeordnet sind, umfasst, wobei die Niederschlagsmengen zumindest teilweise aus einem Zeitraum in der Vergangenheit stammen;
(b) Bereitstellung zumindest eines zweiten Datensatzes im Datenverarbeitungssystem wobei der zumindest eine zweite Datensatz bodenbezogene und/oder orographische Daten mit Werten zumindest einer bodenbezogenen Größe, die jeweils geographischen Positionsdaten innerhalb des Untersuchungsgebietes zugeordnet sind, umfasst;
(c) Bereitstellung zumindest eines dritten Datensatzes im Datenverarbeitungssystem, wobei der zumindest eine dritte Datensatz Schadensereignis-Daten über in der Vergangenheit eingetretene Schadensereignisse, die jeweils geographischen Positionsdaten innerhalb des Untersuchungsgebietes zugeordnet sind, umfasst; und
(d) Zusammenführen des zumindest einen ersten Datensatzes, des zumindest einen zweiten Datensatzes und des zumindest einen dritten Datensatzes im Datenverarbeitungssystem, wobei unter Anwendung zumindest eines Algorithmus aus den Niederschlagsdaten des ersten Datensatzes und den bodenbezogenen und/oder orographischen Daten des zweiten Datensatzes und in Abhängigkeit der Schadensereignis-Daten des dritten Datensatzes
innerhalb des Untersuchungsgebietes ortsabhängig der Eintritt und/oder das Ausmaß eines Schadensereignisses ermittelt und/oder eine Wahrscheinlichkeit für den Eintritt und/oder ein Ausmaß eines Schadensereignisses berechnet wird
und/oder
innerhalb eines vorgegebenen oder vorgebbaren Zeitraumes zeitabhängig der Eintritt und/oder das Ausmaß eines Schadensereignisses ermittelt und/oder eine Wahrscheinlichkeit für den Eintritt und/oder ein Ausmaß eines Schadensereignisses (2) berechnet wird.

Mit dem erfindungsgemäßen Verfahren lassen sich Schadensereignisse, insbesondere Überflutungszustände, lokalisieren und/oder deren Ausmaße, insbesondere Wasserstände in Überflutungsgebieten, ermitteln. Ebenso bevorzugt ist, wenn in dem Schritt (d) der zeitliche Verlauf eines Schadensereignisses ermittelt wird (z.B. die zeitliche Entwicklung der Überflutungszustände, insbesondere Wasserpegel, Strömungsgeschwindigkeiten und -richtungen).

Neben einer Überflutungszustandsanalyse eignet sich das Verfahren auch zur Analyse der direkten Auswirkungen von Niederschlägen auf den Boden und kann somit auch zur Vorhersage von Erdrutschen bzw. Muren verwendet werden.

Durch die Einbeziehung eines Datensatzes mit Schadensereignis-Daten über in der Vergangenheit eingetretene Schadensereignisse kann die ortsabhängige Ermittlung und/oder Abschätzung eines Eintritts und/oder Ausmaßes von Schadensereignissen aufgrund von Niederschlägen wird die Zuverlässigkeit bzw. Treffsicherheit eines solchen Verfahrens deutlich erhöht. Ein wesentlicher Vorteil des erfindungsgemäßen Verfahrens gegenüber herkömmlichen hydrologischen/hydraulischen Modellen liegt in der Tatsache, dass das Verfahren mit deutlich weniger Rechenaufwand auskommt. Dies ermöglicht wiederum eine flächendeckende Anwendung unmittelbar nach Unwetterereignissen. Der reduzierte Rechenaufwand ergibt sich dadurch, dass die Zusammenführung des ersten Datensatzes (Niederschlagsdaten) und des zweiten Datensatzes (bodenbezogene und/oder orographische Daten) nach einfachen, wenig Rechenaufwand erfordernden Methoden, z.B. sogenannten "straightforward" Verfahren, erfolgen kann. Die Zuverlässigkeit bzw. Treffsicherheit des Verfahrens wird durch Einbeziehung des dritten Datensatzes (Schadensereignisse in der Vergangenheit) deutlich erhöht. Die Einbeziehung des dritten Datensatzes kann beispielsweise durch eine einfache Gewichtung des aus der Zusammenführung des ersten und zweiten Datensatzes resultierenden (Zwischen-)Ergebnisses erfolgen.

So kann z.B. aus dem ersten und zweiten Datensatz die Bodenfeuchte bzw. der (Feuchtig-keits-)Sättigungsgrad des Bodens ermittelt werden. Anders als bei herkömmlichen Bodensättigungsanalysen kann auf einfache, wenig Rechenaufwand erfordernde Algorithmen zurückgegriffen werden (z.B. Zufluss, Speicherfähigkeit des Bodens, Abfluss). Da im vorliegenden Fall nicht auf eine ausschließliche Ableitung eines Schadenseintritts aus den aktuellen Mess- und Bodendaten abgestellt wird, sondern ein dritter Datensatz mit historischen Schadensereignissen herangezogen wird, können auch die (datenbezogenen und rechnerischen) Anforderungen an die Genauigkeit des aus den ersten und zweiten Datensätzen gewonnenen Zwischenergebnisses gering gehalten werden.

Trotz des stark reduzierten Rechenaufwandes wird mit dem erfindungsgemäßen Verfahren die Plausibilität der Schadensprognosen verbessert. Durch den Vergleich mit historischen Schadensdaten können tatsächlich zu erwartende Schäden besser abgeschätzt werden, anstatt lediglich Wasserstände am Boden zu messen.

Ein weiterer Vorteil besteht in der Hochrechnung von Gesamtschadensmengen. So kann das Verfahren sowohl zur Plausibilisierung als auch zur Hochrechnung von Gesamtschadenmengen über ein großes Gebiet (z.B. einen Staat) verwendet werden, um zukünftige Schadensaufkommen zu antizipieren.

Die Erfindung ermöglicht weiters die Anwendung auf Wetterprognosemodelle. Das Verfahren kann in Kombination mit häufig aktualisierten Wetterprognosemodellen eingesetzt werden, um zeitnahe und präzise Überflutungswarnungen zu erstellen. Ebenso kann es auf Klimamodelle angewendet werden, um zukünftige Überflutungsrisiken zu bestimmen und langfristige Anpassungsstrategien zu entwickeln.

Das Datenverarbeitungssystem kann dabei aus einer oder mehreren miteinander vernetzten Datenverarbeitungsvorrichtungen zusammengesetzt sein. Es ist bevorzugt, wenn das Datenverarbeitungssystem (a) eine erste Eingangsschnittstelle und/oder eine erste Speichersektion zum Empfangen und/oder zum (Zwischen-)Speichern des ersten Datensatzes, (b) eine zweite Eingangsschnittstelle und/oder eine zweite Speichersektion zum Empfangen und/oder zum (Zwischen-)Speichern des zweiten Datensatzes, (c) eine dritte Eingangsschnittstelle und/oder eine dritte Speichersektion zum Empfangen und/oder zum (Zwischen-)Speichern des dritten Datensatzes, und (d) eine - den Algorithmus enthaltende - Datenverarbeitungssektion zum Zusammenführen des ersten Datensatzes, des zweiten Datensatzes und des dritten Datensatzes umfasst.

Eine bevorzugte Ausführungsform zeichnet sich dadurch aus, dass die im Schritt (d) durchgeführte Ermittlung und/oder Berechnung derart erfolgt, dass aus den Niederschlagsdaten des ersten Datensatzes und den bodenbezogenen und/oder orographischen Daten des zweiten Datensatzes ein Zwischenergebnis, vorzugsweise in Form einer/-s ortsabhängig ermittelten Bodenfeuchte und/oder Sättigungsgrades des Bodens und/oder in Form einer Wahrscheinlichkeit für den Eintritt und/oder ein Ausmaß eines Schadensereignisses, ermittelt wird und dass das Zwischenergebnis mit den Schadensereignis-Daten des dritten Datensatzes gewichtet wird, wobei an jenen geographischen Positionsdaten, an denen in der Vergangenheit zumindest ein Schadensereignis eingetreten ist und/oder Schadensereignisse ein hohes Ausmaß hatten, eine stärkere Gewichtung des Zwischenergebnisses erfolgt als an geographischen Positionsdaten, an denen in der Vergangenheit keine Schadensereignisse eingetreten sind und/oder Schadensereignisse ein geringes Ausmaß hatten.

Beispielsweise kann aus dem ersten und zweiten Datensatz eine (Zwischen-)Wahrscheinlichkeit berechnet werden, die anschließend unter Anwendung des dritten Datensatzes entsprechend gewichtet wird. Somit erhalten geographische Positionen, an den bereits in der Vergangenheit Schadensereignisse eingetreten sind, höhere Wahrscheinlichkeiten (als im Zwischenergebnis verzeichnet) zugeordnet. Optional können in entsprechender Weise geographischen Positionen, an den in der Vergangenheit keine Schadensereignisse eingetreten sind, geringere Wahrscheinlichkeiten (als im Zwischenergebnis verzeichnet) zugeordnet werden.

Auch diese Ausführungsform zeichnet sich durch einen stark verringerten Rechenaufwand aus, zumal Gewichtungen durch einen Algorithmus einfach abgebildet werden können.

Eine bevorzugte Ausführungsform zeichnet sich dadurch aus, dass das Ergebnis der in Schritt (d) durchgeführten Ermittlung und/oder Berechnung in Form eines Ergebnis-Datensatzes, der den Eintritt und/oder das Ausmaß des Schadensereignisses und/oder die Wahrscheinlichkeit für den Eintritt und/oder das Ausmaß eines Schadensereignisses mit jeweils zugeordneten geographischen Positionsdaten innerhalb des Untersuchungsgebietes und/oder jeweils zugeordneten Zeitdaten innerhalb eines vorgegebenen oder (vorzugsweise über eine Benutzerschnittelle) vorgebbaren Zeitraumes umfasst, bereitgestellt wird. Die Bereitstellung kann z.B. in Form einer Datei und/oder einer graphischen Darstellung erfolgen und ermöglicht dem Benutzer, die relevanten Informationen auszulesen bzw. weiterzuleiten.

Eine bevorzugte Ausführungsform zeichnet sich dadurch aus, dass das Ergebnis der in Schritt (d) durchgeführten Ermittlung und/oder Berechnung an einer Benutzerschnittstelle (z.B. Bildschirm, Lautsprecher, etc.) ausgegeben und/oder mittels einer elektronischen Nachrichtenversandeinrichtung (vorzugsweise als E-Mail, Kurznachricht, SMS, etc.) versendet wird.

Dadurch können vom Schadensereignis Betroffene oder andere Beteiligte unmittelbar - und vorzugsweise vollautomatisch - von einem bevorstehenden oder bereits eingetretenen niederschlagsbedingten Extremereignis mit Schadensfolge gewarnt bzw. informiert werden.

Eine bevorzugte Ausführungsform zeichnet sich dadurch aus, dass das mit dem Ergebnis der in Schritt durchgeführten Ermittlung und/oder Berechnung eine digitale Karte, in der der Eintritt und/oder das Ausmaß des Schadensereignisses und/oder die Wahrscheinlichkeit für den Eintritt und/oder das Ausmaß eines Schadensereignisses an der ermittelten geographischen Position eingetragen wird/werden, erstellt wird, wobei vorzugsweise die digitale Karte mittels einer Bildausgabeeinrichtung graphisch dargestellt wird. Diese Ausführungsform lässt über die geographische Lokalisierung des Schadensereignisses auch topologische Gegebenheiten erkennen, wodurch Rückschlüsse auf die Art, lokale Ursachen und den zeitlichen Verlauf von Unwetterereignissen gezogen werden können.

Eine bevorzugte Ausführungsform zeichnet sich dadurch aus, dass das Verfahren den Schritt: Bereitstellung zumindest eines vierten Datensatzes, wobei der zumindest eine vierte Datensatz - aus Messungen gewonnene und/oder aus Vorhersagen ermittelte - Niederschlagsdaten mit aktuellen und/oder in der Zukunft zu erwartenden Niederschlagsmengen, die jeweils geographischen Positionsdaten innerhalb des Untersuchungsgebietes zugeordnet sind, umfasst, und dass im Schritt (d) die ortsabhängige Ermittlung des Eintritts und/oder des Ausmaßes eines Schadensereignisses und/oder Berechnung der Wahrscheinlichkeit für den Eintritt und/oder ein Ausmaß eines Schadensereignisses auch in Abhängigkeit der Niederschlagsdaten des zumindest einen vierten Datensatzes erfolgt. Mit dieser Ausführungsform können u.a. auch in der Zukunft liegende Schadensereignisse vorhergesagt und lokalisiert werden, wodurch es ermöglicht wird, geeignete Maßnahmen zur Verringerung des Schadensausmaßes zu treffen.

Eine bevorzugte Ausführungsform zeichnet sich dadurch aus, dass aus den Niederschlagsdaten des zumindest einen ersten Datensatzes und den bodenbezogenen und/oder orographischen Daten des zumindest einen zweiten Datensatzes die Bodenfeuchte und/oder der Sättigungsgrad des Bodens ortsabhängig ermittelt und geographischen Positionsdaten innerhalb des Untersuchungsgebietes zugeordnet wird/werden. Die Bodenfeuchte bzw. der Sättigungsgrad liefern einen soliden Ausgangspunkt zur Ermittlung/Berechnung von Schadenseintritt bzw. -wahrscheinlichkeit.

Eine bevorzugte Ausführungsform zeichnet sich dadurch aus, dass die Boden-feuchte und/oder der Sättigungsgrad des Bodens unter Berücksichtigung der Niederschlagszufuhr, der Infiltration, der Evapotranspiration und/oder des Abflusses und/oder mittels einer Simulation der Wasserbewegung innerhalb des Bodens er-mittelt wird. Diese - üblicherweise bekannten und einfach verfügbaren - Parameter ermöglichen die algorithmische Realisierung eines einfachen Zufluss- und Abflussprinzips, welches wenig Rechenaufwand erfordert.

Eine bevorzugte Ausführungsform zeichnet sich dadurch aus, dass die ortsabhängig ermittelte Bodenfeuchte und/oder Sättigungsgrad des Bodens mit den Schadensereignis-Daten des zumindest einen dritten Datensatzes verglichen wird, wobei vorzugsweise zumindest ein fünfter Datensatz generiert wird, in dem ortsabhängig die Schadenereignis-Daten des zumindest einen dritten Datensatzes jeweils der Bodenfeuchte und/oder dem Sättigungsgrad des Bodens an der jeweiligen geographischen Position des Schadenereignisses zugeordnet sind. Der oben erwähnte Vergleich ermöglicht insbesondere die Abschätzung, inwieweit die Ermittlung der Bodenfeuchte und/oder des Sättigungsgrades des Bodens bereits für sich gesehen aussagekräftig sind oder entsprechend angepasst bzw. gewichtet werden müssen, um zu einer zuverlässigen Aussage bzw. Prognose zu gelangen
Eine bevorzugte Ausführungsform zeichnet sich dadurch aus, dass das Verfahren den Schritt: Erstellen eines Ergebnis-Datensatzes, in dem ortsabhängig einer - vorzugsweise über einen vorgegebenen Zeitraum angesammelten - Niederschlagsmenge der Eintritt und/oder ein Ausmaß eines Schadensereignisses und/oder eine Wahrscheinlichkeit für den Eintritt und/oder ein Ausmaß eines Schadensereignisses zugeordnet ist,
umfasst.

Eine bevorzugte Ausführungsform zeichnet sich dadurch aus, dass das Verfahren den Schritt: Erstellen zumindest einer digitalen Karte, in der der Eintritt und/oder das Ausmaß des Schadensereignisses und/oder die Wahrscheinlichkeit für den Eintritt und/oder das Ausmaß eines Schadensereignisses an der ermittelten geographischen Position eingetragen ist,
und/oder
Erstellen zumindest einer digitalen Karte, in der die ortsabhängig ermittelte Bodenfeuchte und/oder Sättigungsgrad des Bodens eingetragen ist und/oder in der die - vorzugsweise über einen vorgegebenen Zeitraum angesammelte - Niederschlagsmenge eingetragen ist. umfasst.

Eine bevorzugte Ausführungsform zeichnet sich dadurch aus, dass die bodenbezogenen und/oder orographischen Daten des zweiten Datensatzes
Daten über die Korngröße und/oder die Porengröße und/oder die Bodentextur und/oder die Bodenart und/oder einen Vegetationsindex und/oder die Wasserspeicherfähigkeit und/oder
Daten über lokale orographische Gegebenheiten, insbesondere die Geländeform und/oder Höhenunterschiede und/oder natürliche und/oder künstliche Abflüsse,
umfassen.

Eine bevorzugte Ausführungsform zeichnet sich dadurch aus, dass - wenn die Ermittlung und/oder Berechnung in Schritt (d) ergibt, dass ein Schadensereignis eintritt und/oder das Ausmaß des Schadensereignisses und/oder die Wahrscheinlichkeit für den Eintritt und/oder ein Ausmaß eines Schadensereignisses einen - vorzugweise von einem Benutzer vorgebbaren
- Grenzwert überschreitet, das Ergebnis der Ermittlung und/oder Berechnung - vorzugsweise in Form einer digitalen Karte und/oder eines Textes und/oder einer Warnung - automatisch an einer Benutzerschnittstelle ausgegeben und/oder automatisch mittels einer elektronischen Nachrichtenversandeinrichtung versendet wird.

Eine bevorzugte Ausführungsform zeichnet sich dadurch aus, dass der Algorithmus ein konfigurierbarer und/oder selbstlernender und/oder auf künstlicher Intelligenz basierender Algorithmus ist.

Eine bevorzugte Ausführungsform zeichnet sich dadurch aus, dass das Datenverarbeitungssystem zumindest einen Server und/oder zumindest ein tragbares Gerät, vorzugsweise ein Smartphone oder ein Tablett, umfasst.

Eine bevorzugte Ausführungsform zeichnet sich dadurch aus, dass das Datenverarbeitungssystem zumindest eine Messeinrichtung zur Messung einer Niederschlagsmenge und/oder zumindest eine Messeinrichtung zur Messung einer bodenbezogenen Größe umfasst.

Die Erfindung betrifft auch ein Verfahren zur Abwendung und/oder Verringerung des Ausmaßes von Schadenereignissen aufgrund von Niederschlägen, insbesondere Überflutungen, Erdrutschen und/oder Muren,
bei dem - gemäß einem erfindungsgemäßen Verfahren zur ortsabhängigen Ermittlung und/oder Abschätzung eines Eintritts und/oder Ausmaßes von Schadensereignissen aufgrund von Niederschlägen - ortsabhängig der Eintritt und/oder das Ausmaß eines Schadensereignisses ermittelt und/oder eine Wahrscheinlichkeit für den Eintritt und/oder ein Ausmaß eines Schadensereignisses berechnet wird
und in Abhängigkeit des Ergebnisses der in Schritt (d) durchgeführten Ermittlung und/oder Berechnung, insbesondere wenn die Ermittlung und/oder Berechnung in Schritt (d) ergibt, dass ein Schadensereignis eintritt und/oder das Ausmaß des Schadensereignisses und/oder die Wahrscheinlichkeit für den Eintritt und/oder ein Ausmaß eines Schadensereignisses einen - vorzugweise von einem Benutzer vorgebbaren - Grenzwert überschreitet, - vorzugsweise automatisch - zumindest eine Maßnahme zur Abwendung und/oder Verringerung des Ausmaßes eines Schadensereignisses getroffen wird,
wobei vorzugsweise die zumindest eine Maßnahme zur Abwendung und/oder Verringerung des Ausmaßes eines Schadensereignisses die automatische Ansteuerung zumindest eines Aktors, insbesondere eines Antriebs einer Schleuse, einer Barriere und/oder Staumauer, und/oder die automatische Alarmierung von Einsatzkräften umfasst.

Durch diese Maßnahme können vollautomatisch - und unmittelbar, mehr oder weniger ohne wertvolle Zeit verstreichen zu lassen - Maßnahmen in die Wege geleitet werden, um Schadensereignisse abzuwenden bzw. deren Ausmaß zu verringern.

Die Erfindung betrifft auch einen Algorithmus zur ortsabhängigen Ermittlung und/oder Abschätzung eines Eintritts und/oder Ausmaßes von Schadensereignissen aufgrund von Niederschlägen, insbesondere Überflutungen, Erdrutschen und/oder Muren, in einem Untersuchungsgebiet, wobei der Algorithmus die Schritte eines erfindungsgemäßen Verfahrens aufweist.

Die Erfindung betrifft auch ein Datenverarbeitungssystem und/oder auf einem Datenträger gespeichertes Computerprogrammprodukt, zur ortsabhängigen Ermittlung und/oder Abschätzung eines Eintritts und/oder Ausmaßes von Schadensereignissen aufgrund von Niederschlägen, insbesondere Überflutungen, Erdrutschen und/oder Muren, in einem Untersuchungsgebiet, wobei in dem Datenverarbeitungssystem und/oder in dem Computerprogrammprodukt ein erfindungsgemäßer Algorithmus hinterlegt ist.

Zum besseren Verständnis der Erfindung wird diese anhand der nachfolgenden Figuren näher erläutert.

Es zeigen jeweils in stark vereinfachter, schematischer Darstellung:
- Fig. 1: eine Ausführungsform eines erfindungsgemäßen Datenverarbeitungssystems und des darin ablaufenden Verfahrens;
- Fig. 2: eine Ausführungsform einer digitalen Karte mit topographischen Elementen und eingetragenen Schadensereignissen;
- Fig. 3: ein Datenverarbeitungssystem, welches mit einem Aktor, insbesondere einem Antrieb einer Schleuse, einer Barriere und/oder Staumauer, verbunden ist;
- Fig. 4: einen Datenträger mit einem darauf gespeicherten Algorithmus.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

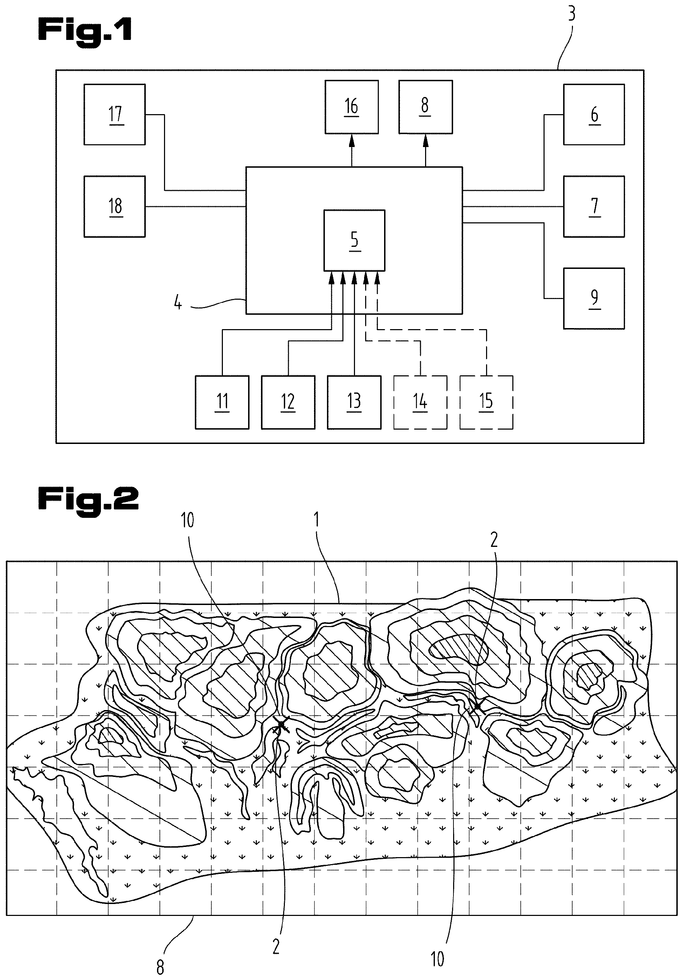

Fig. 1 zeigt schematisch eine Ausführungsform eines Datenverarbeitungssystem 3 mittels der ein Verfahren zur ortsabhängigen und/oder zeitabhängigen Ermittlung und/oder Abschätzung eines Eintritts und/oder Ausmaßes von Schadensereignissen 2 aufgrund von Niederschlägen, insbesondere Überflutungen, Erdrutschen und/oder Muren, in einem Untersuchungsgebiet 1 durchgeführt wird. Das Datenverarbeitungssystem umfasst zumindest eine Datenverarbeitungsvorrichtung 4.

Das mittels des Datenverarbeitungssystems 3 durchgeführte Verfahren umfasst die Schritte:
(a) Bereitstellung zumindest eines ersten Datensatzes 11 im Datenverarbeitungssystem 3, wobei der zumindest eine erste Datensatz 11 - aus Messungen gewonnene - Niederschlagsdaten mit Niederschlagsmengen, die jeweils geographischen Positionsdaten 10 innerhalb des Untersuchungsgebietes 1 zugeordnet sind, umfasst, wobei die Niederschlagsmengen zumindest teilweise aus einem Zeitraum in der Vergangenheit stammen;
(b) Bereitstellung zumindest eines zweiten Datensatzes 12 im Datenverarbeitungssystem 3 wobei der zumindest eine zweite Datensatz 12 bodenbezogene und/oder orographische Daten mit Werten zumindest einer bodenbezogenen Größe, die jeweils geographischen Positionsdaten 10 innerhalb des Untersuchungsgebietes 1 zugeordnet sind, umfasst;
(c) Bereitstellung zumindest eines dritten Datensatzes 13 im Datenverarbeitungssystem 3, wobei der zumindest eine dritte Datensatz 13 Schadensereignis-Daten über in der Vergangenheit eingetretene Schadensereignisse, die jeweils geographischen Positionsdaten 10 innerhalb des Untersuchungsgebietes 1 zugeordnet sind, umfasst; und
(d) Zusammenführen des zumindest einen ersten Datensatzes 11, des zumindest einen zweiten Datensatzes 12 und des zumindest einen dritten Datensatzes 13 im Datenverarbeitungssystem 3, wobei unter Anwendung zumindest eines Algorithmus 5 aus den Niederschlagsdaten des ersten Datensatzes 11 und den bodenbezogenen und/oder orographischen Daten des zweiten Datensatzes 12 und in Abhängigkeit der Schadensereignis-Daten des dritten Datensatzes 13 innerhalb des Untersuchungsgebietes 1 ortsabhängig der Eintritt und/oder das Ausmaß eines Schadensereignisses 2 ermittelt und/oder eine Wahrscheinlichkeit für den Eintritt und/oder ein Ausmaß eines Schadensereignisses 2 berechnet wird.

Zusätzlich zur Ortsabhängigkeit kann innerhalb eines vorgegebenen oder vorgebbaren Zeitraumes zeitabhängig der Eintritt und/oder das Ausmaß eines Schadensereignisses 2 ermittelt und/oder eine Wahrscheinlichkeit für den Eintritt und/oder ein Ausmaß eines Schadensereignisses 2 berechnet werden.

Es ist bevorzugt, wenn das Datenverarbeitungssystem - wie in Fig. 1 dargestellt - eine erste Eingangsschnittstelle und/oder eine erste Speichersektion zum Empfangen und/oder zum (Zwischen-)Speichern des ersten Datensatzes 11, eine zweite Eingangsschnittstelle und/oder eine zweite Speichersektion zum Empfangen und/oder zum (Zwischen-)Speichern des zweiten Datensatzes 12, eine dritte Eingangsschnittstelle und/oder eine dritte Speichersektion zum Empfangen und/oder zum (Zwischen-)Speichern des dritten Datensatzes 13, und eine - den Algorithmus 5 enthaltende - Datenverarbeitungssektion zum Zusammenführen des ersten Datensatzes 11, des zweiten Datensatzes 12 und des dritten Datensatzes 13 umfasst.

Das Ergebnis der in Schritt (d) durchgeführten Ermittlung und/oder Berechnung kann in Form eines Ergebnis-Datensatzes 16, der den Eintritt und/oder das Ausmaß des Schadensereignisses 2 und/oder die Wahrscheinlichkeit für den Eintritt und/oder das Ausmaß eines Schadensereignisses 2 mit jeweils zugeordneten geographischen Positionsdaten 10 innerhalb des Untersuchungsgebietes 1 umfasst, bereitgestellt werden.

Weiters kann das Ergebnis der in Schritt (d) durchgeführten Ermittlung und/oder Berechnung an einer Benutzerschnittstelle 6 ausgegeben und/oder mittels einer elektronischen Nachrichtenversandeinrichtung 7 versendet werden.

Eine Ausgestaltung des Verfahrens beruht darauf, dass die im Schritt (d) durchgeführte Ermittlung und/oder Berechnung derart erfolgt, dass aus den Niederschlagsdaten des ersten Datensatzes 11 und den bodenbezogenen und/oder orographischen Daten des zweiten Datensatzes 12 ein Zwischenergebnis ermittelt wird. Dieses Zwischenergebnis kann z.B. in Form einer/-s ortsabhängig ermittelten Bodenfeuchte und/oder Sättigungsgrades des Bodens und/oder in Form einer Wahrscheinlichkeit für den Eintritt und/oder ein Ausmaß eines Schadensereignisses 2 generiert werden. Das Zwischenergebnis wird anschließend mit den Schadensereignis-Daten des dritten Datensatzes 13 gewichtet. Dies bedeutet, dass an jenen geographischen Positionsdaten 10, an denen in der Vergangenheit zumindest ein Schadensereignis 2 eingetreten ist und/oder Schadensereignisse 2 ein hohes Ausmaß hatten, eine stärkere Gewichtung des Zwischenergebnisses erfolgt als an geographischen Positionsdaten 10, an denen in der Vergangenheit keine Schadensereignisse 2 eingetreten sind und/oder Schadensereignisse 2 ein geringes Ausmaß hatten.

Aus Fig. 2 ist ersichtlich, dass das mit dem Ergebnis der in Schritt (d) durchgeführten Ermittlung und/oder Berechnung eine digitale Karte 8, in der der Eintritt und/oder das Ausmaß des Schadensereignisses 2 und/oder die Wahrscheinlichkeit für den Eintritt und/oder das Ausmaß eines Schadensereignisses 2 an der ermittelten geographischen Position eingetragen wird/werden, erstellt werden kann. Die digitale Karte 8 kann z.B. mittels einer Bildausgabeeinrichtung 9 (z.B. Bildschirm, Projektor) graphisch dargestellt werden.

In einer erstellten digitalen Karte 8 kann auch die ortsabhängig ermittelte Bodenfeuchte und/oder Sättigungsgrad des Bodens und/oder die - vorzugsweise über einen vorgegebenen Zeitraum angesammelte - Niederschlagsmenge eingetragen sein.

In der bevorzugten Ausführungsform der Fig. 1 kann das Verfahren weiters den folgenden Verfahrensschritt umfassen: nämlich die Bereitstellung zumindest eines vierten Datensatzes 14, wobei der zumindest eine vierte Datensatz 14 - aus Messungen gewonnene und/oder aus Vorhersagen ermittelte - Niederschlagsdaten mit aktuellen und/oder in der Zukunft zu erwartenden Niederschlagsmengen, die jeweils geographischen Positionsdaten 10 innerhalb des Untersuchungsgebietes 1 zugeordnet sind. Im Schritt (d) erfolgt dann die ortsabhängige Ermittlung des Eintritts und/oder des Ausmaßes eines Schadensereignisses 2 und/oder Berechnung der Wahrscheinlichkeit für den Eintritt und/oder ein Ausmaß eines Schadensereignisses 2 auch in Abhängigkeit der Niederschlagsdaten des zumindest einen vierten Datensatzes 14.

Es ist bevorzugt, wenn aus den Niederschlagsdaten des zumindest einen ersten Datensatzes 11 und den bodenbezogenen und/oder orographischen Daten des zumindest einen zweiten Datensatzes 12 die Bodenfeuchte und/oder der Sättigungsgrad des Bodens ortsabhängig ermittelt und geographischen Positionsdaten 10 innerhalb des Untersuchungsgebietes 1 zugeordnet wird/werden. Dabei kann die Bodenfeuchte und/oder der Sättigungsgrad des Bodens unter Berücksichtigung der Niederschlagszufuhr, der Infiltration, der Evapotranspiration und/oder des Abflusses und/oder mittels einer Simulation der Wasserbewegung innerhalb des Bodens ermittelt werden.

Besonders bevorzugt ist es, wenn die ortsabhängig ermittelte Bodenfeuchte und/oder Sättigungsgrad des Bodens mit den Schadensereignis-Daten des zumindest einen dritten Datensatzes 13 verglichen wird. Dabei kann zusätzlich zumindest ein fünfter Datensatz 15 generiert werden, in dem ortsabhängig die Schadenereignis-Daten des zumindest einen dritten Datensatzes 13 jeweils der Bodenfeuchte und/oder dem Sättigungsgrad des Bodens an der jeweiligen geographischen Position des Schadenereignisses 2 zugeordnet sind.

Zusätzlich oder alternativ kann das Verfahren den folgenden Verfahrensschritt umfassen: nämlich das Erstellen eines Ergebnis-Datensatzes 16, in dem ortsabhängig einer - vorzugsweise über einen vorgegebenen Zeitraum angesammelten - Niederschlagsmenge der Eintritt und/oder ein Ausmaß eines Schadensereignisses 2 und/oder eine Wahrscheinlichkeit für den Eintritt und/oder ein Ausmaß eines Schadensereignisses 2 zugeordnet ist.

Die bodenbezogenen und/oder orographischen Daten des zweiten Datensatzes 12 können Daten über die Korngröße und/oder die Porengröße und/oder die Bodentextur und/oder die Bodenart und/oder einen Vegetationsindex und/oder die Wasserspeicherfähigkeit umfassen. Ebenso können Daten über lokale orographische Gegebenheiten, insbesondere die Geländeform und/oder Höhenunterschiede und/oder natürliche und/oder künstliche Abflüsse darin enthalten sein.

Wenn die Ermittlung und/oder Berechnung in Schritt (d) ergibt, dass ein Schadensereignis 2 eintritt und/oder das Ausmaß des Schadensereignisses und/oder die Wahrscheinlichkeit für den Eintritt und/oder ein Ausmaß eines Schadensereignisses 2 einen - vorzugweise von einem Benutzer vorgebbaren - Grenzwert überschreitet, kann das Ergebnis der Ermittlung und/oder Berechnung - vorzugsweise in Form einer digitalen Karte 8 und/oder eines Textes und/oder einer Warnung - automatisch an einer Benutzerschnittstelle 6 ausgegeben und/oder automatisch mittels einer elektronischen Nachrichtenversandeinrichtung 7 versendet werden.

Der Algorithmus 5 kann ein konfigurierbarer und/oder selbstlernender und/oder auf künstlicher Intelligenz basierender Algorithmus sein.

Das Datenverarbeitungssystem 3 kann zumindest einen Server und/oder zumindest ein tragbares Gerät, vorzugsweise ein Smartphone oder ein Tablett, umfassen. Insbesondere kann das Datenverarbeitungssystem sowohl als zentrales oder dezentrales System aufgebaut sein. Z.B. kann es einen oder mehrere zentrale(n) Server und mit diesem kommunikationsverbundene periphere Datenverarbeitungs- und/oder Datenübertragungsvorrichtungen umfassen. Ebenso können Messeinrichtungen mit dem zentralen Server kommunikationsverbunden sein.

Es ist daher insbesondere bevorzugt, wenn - wie in Fig. 1 schematisch dargestellt - das Datenverarbeitungssystem 3 zumindest eine Messeinrichtung 17 zur Messung einer Niederschlagsmenge und/oder zumindest eine Messeinrichtung 18 zur Messung einer bodenbezogenen Größe umfasst.

Die Erfindung umfasst auch ein Verfahren zur Abwendung und/oder Verringerung des Ausmaßes von Schadenereignissen aufgrund von Niederschlägen. Dabei wird auf die Ergebnisse der oben beschriebenen Methode zurückgegriffen. Es wird nämlich in Abhängigkeit des Ergebnisses der in Schritt (d) durchgeführten Ermittlung und/oder Berechnung, insbesondere wenn die Ermittlung und/oder Berechnung in Schritt (d) ergibt, dass ein Schadensereignis 2 eintritt und/oder das Ausmaß des Schadensereignisses 2 und/oder die Wahrscheinlichkeit für den Eintritt und/oder ein Ausmaß eines Schadensereignisses 2 einen - vorzugweise von einem Benutzer vorgebbaren - Grenzwert überschreitet, - vorzugsweise automatisch - zumindest eine Maßnahme zur Abwendung und/oder Verringerung des Ausmaßes eines Schadensereignisses 2 getroffen wird.

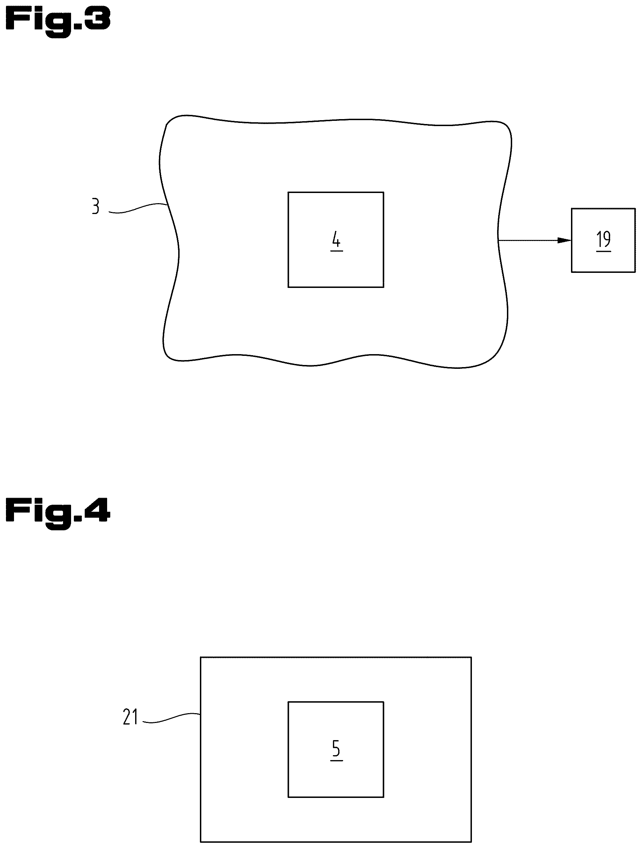

Die zumindest eine Maßnahme zur Abwendung und/oder Verringerung des Ausmaßes eines Schadensereignisses 2 kann die automatische Ansteuerung zumindest eines Aktors 19, insbesondere eines Antriebs einer Schleuse, einer Barriere und/oder Staumauer, und/oder die automatische Alarmierung 20 von Einsatzkräften umfassen. Diese Ausgestaltung der Erfindung ist schematisch in Fig. 3 dargestellt.

Schließlich zeigt Fig. 4 einen Datenträger 21 mit darauf gespeichertem Computerprogrammprodukt, zur ortsabhängigen Ermittlung und/oder Abschätzung eines Eintritts und/oder Ausmaßes von Schadensereignissen 2 aufgrund von Niederschlägen in einem Untersuchungsgebiet. In dem Computerprogrammprodukt ist ein Algorithmus 5 mit den Schritten des erfindungsgemäßen Verfahrens hinterlegt.

Abschließend wird ein Beispiel einer Ermittlung bzw. Berechnung eines Schadenseintrittes bzw. -ausmaßes gegeben. Dabei kann es sich insbesondere um ein Verfahren zur Bestimmung eines (ein Schadensereignis darstellenden) Überflutungszustandes handeln:
Schritt 1: Bestimmung des Niederschlagszustandes in der Vergangenheit
   a) Datenquellen:
      - Satellitendaten: Nutzung von Satellitenbildern zur Erfassung von Niederschlagsmengen und -mustern.
      - Wetterstationsdaten: Sammeln von historischen Wetterdaten durch bodengestützte Wetterstationen.
      - Radardaten: Verwendung von Wetterradardaten zur genauen Messung und Kartierung von Niederschlagsereignissen.
   b) Datenintegration und Verarbeitung:
      - Kombination der Datenquellen: Integration der Daten aus Satelliten, Wetterstationen und Radaranlagen in ein einheitliches Datensystem.
      - Algorithmen und Modelle: Einsatz von meteorologischen Algorithmen und Modellen zur Analyse der gesammelten Daten.
      - Validierung und Kalibrierung: Überprüfung und Anpassung der Modelle anhand von bekannten historischen Überflutungsereignissen.
   c) Ergebnisse:
      - Niederschlagskarten: Erstellen von detaillierten Karten und Zeitreihen, die die Niederschlagsverteilung und -mengen über den betrachteten Zeitraum darstellen.
Schritt 2: Ermittlung des Boden-Zustandes über ein Bodensättigungsanalyseverfahren
   a) Boden- und Orografiedaten:
      - Bodentypen: Sammeln von Daten zu den verschiedenen Bodentypen im Untersuchungsgebiet, einschließlich deren physikalischen und chemischen Eigenschaften.
      - Orografie: Erfassen von topographischen Informationen wie Höhenprofilen, Hangneigungen und Geländemerkmalen.
   b) Objektive Niederschlagsanalyse:
      - Niederschlagsdaten: Nutzung der aus Schritt 1 gewonnenen Niederschlagsinformationen zur genauen ortsspezifischen Analyse der Niederschlagsmenge.
   c) Bodensättigungsanalyseverfahren:
      - Datenintegration: Zusammenführen der Boden- und Orografiedaten mit den Niederschlagsdaten in einem Analysemodell.
      - Feuchtigkeitsbilanz: Berechnung der Feuchtigkeitsbilanz im Boden durch Berücksichtigung von Niederschlagszufuhr, Infiltration, Evapotranspiration und Abfluss.
      - Modellierung der Bodensättigung: Simulation der Wasserbewegung im Boden, um den Sättigungsgrad des Bodens zu bestimmen.
   d) Ergebnisse:
      - Bodensättigungskarten: Erstellung von Karten, die den Sättigungszustand des Bodens über das Untersuchungsgebiet und den betrachteten Zeitraum darstellen.
Schritt 3: Niederschlagsanalyse und Aggregation
   a) Niederschlagsmengen und -raten:
      - Lokale Analyse: Bestimmung der aktuellen und historischen Niederschlagsmengen und -raten am spezifischen Ort und im Einzugsgebiet.
      - Orografische Berücksichtigung: Einbeziehung der lokalen orographischen Gegebenheiten wie Geländeform, Höhenunterschiede und natürliche Abflüsse.
   b) Aggregationen:
      - Datenaggregation: Zusammenführen der gesammelten Niederschlagsmengen und -raten unter Berücksichtigung der Bodenzustände und topographischen Merkmale.
      - Vergleich mit historischen Schadensdaten: Vergleich der aggregierten Niederschlagsdaten mit historisch ermittelten tatsächlichen Schadensdaten, um einen Überflutungszustand zu bestätigen oder zu verneinen.

### Bezugszeichenaufstellung

- 1: Untersuchungsgebiet
- 2: Schadensereignis
- 3: Datenverarbeitungssystem
- 4: Datenverarbeitungsvorrichtung
- 5: Algorithmus
- 6: Benutzerschnittstelle
- 7: Nachrichtenversandeinrichtung
- 8: digitale Karte
- 9: Bildausgabeeinrichtung
- 10: geographische Positionsdaten
- 11: erster Datensatz
- 12: zweiter Datensatz
- 13: dritter Datensatz
- 14: vierter Datensatz
- 15: fünfter Datensatz
- 16: Ergebnis-Datensatz
- 17: Messeinrichtung
- 18: Messeinrichtung
- 19: Aktor
- 20: Alarmierung
- 21: Datenträger

## Patentansprüche

1. Verfahren zur ortsabhängigen und/oder zeitabhängigen Ermittlung und/oder Abschätzung eines Eintritts und/oder Ausmaßes von Schadensereignissen (2) aufgrund von Niederschlägen, insbesondere Überflutungen, Erdrutschen und/oder Muren, in einem Untersuchungsgebiet (1) mittels eines Datenverarbeitungssystems (3) mit zumindest einer Datenverarbeitungsvorrichtung (4), umfassend die Schritte:
(a) Bereitstellung zumindest eines ersten Datensatzes (11) im Datenverarbeitungssystem (3), wobei der zumindest eine erste Datensatz (11) - aus Messungen gewonnene - Niederschlagsdaten mit Niederschlagsmengen, die jeweils geographischen Positionsdaten (10) innerhalb des Untersuchungsgebietes (1) zugeordnet sind, umfasst, wobei die Niederschlagsmengen zumindest teilweise aus einem Zeitraum in der Vergangenheit stammen;
(b)Bereitstellung zumindest eines zweiten Datensatzes (12) im Datenverarbeitungssystem (3) wobei der zumindest eine zweite Datensatz (12) bodenbezogene und/oder orographische Daten mit Werten zumindest einer bodenbezogenen Größe, die jeweils geographischen Positionsdaten (10) innerhalb des Untersuchungsgebietes (1) zugeordnet sind, umfasst;
(c) Bereitstellung zumindest eines dritten Datensatzes (13) im Datenverarbeitungssystem (3), wobei der zumindest eine dritte Datensatz (13) Schadensereignis-Daten über in der Vergangenheit eingetretene Schadensereignisse, die jeweils geographischen Positionsdaten (10) innerhalb des Untersuchungsgebietes (1) zugeordnet sind, umfasst; und
(d)Zusammenführen des zumindest einen ersten Datensatzes (11), des zumindest einen zweiten Datensatzes (12) und des zumindest einen dritten Datensatzes (13) im Datenverarbeitungssystem (3), wobei unter Anwendung zumindest eines Algorithmus (5) aus den Niederschlagsdaten des ersten Datensatzes (11) und den bodenbezogenen und/oder orographischen Daten des zweiten Datensatzes (12) und in Abhängigkeit der Schadensereignis-Daten des drit- ten Datensatzes (13)
innerhalb des Untersuchungsgebietes (1) ortsabhängig der Eintritt und/oder das Aus-
maß eines Schadensereignisses (2) ermittelt und/oder eine Wahrscheinlichkeit für den
Eintritt und/oder ein Ausmaß eines Schadensereignisses (2) berechnet wird und/oder
innerhalb eines vorgegebenen oder vorgebbaren Zeitraumes zeitabhängig der Eintritt
und/oder das Ausmaß eines Schadensereignisses (2) ermittelt und/oder eine Wahrscheinlichkeit für den Eintritt und/oder ein Ausmaß eines Schadensereignisses (2) berechnet wird.

2. Verfahren nach Anspruch 1, **dadurch gekennzeichnet,**
**dass** das Ergebnis der in Schritt (d) durchgeführten Ermittlung und/oder Berechnung in Form eines Ergebnis-Datensatzes (16), der den Eintritt und/oder das Ausmaß des Schadensereignisses (2) und/oder die Wahrscheinlichkeit für den Eintritt und/oder das Ausmaß eines Schadensereignisses (2) mit jeweils zugeordneten geographischen Positionsdaten (10) innerhalb des Untersuchungsgebietes (1) und/oder jeweils zugeordneten Zeitdaten innerhalb eines vorgegebenen oder vorgebbaren Zeitraumes umfasst, bereitgestellt wird
und/oder
**dass** das Ergebnis der in Schritt (d) durchgeführten Ermittlung und/oder Berechnung an einer Benutzerschnittstelle (6) ausgegeben und/oder mittels einer elektronischen Nachrichtenversandeinrichtung (7) versendet wird.

3. Verfahren nach Anspruch 1 oder 2, **dadurch gekennzeichnet, dass** das mit dem Ergebnis der in Schritt (d) durchgeführten Ermittlung und/oder Berechnung eine digitale Karte (8), in der der Eintritt und/oder das Ausmaß des Schadensereignisses (2) und/oder die Wahrscheinlichkeit für den Eintritt und/oder das Ausmaß eines Schadensereignisses (2) an der ermittelten geographischen Position eingetragen wird/werden, erstellt wird, wobei vorzugsweise die digitale Karte (8) mittels einer Bildausgabeeinrichtung (9) graphisch dargestellt wird.

4. Verfahren nach einem der vorhergehenden Ansprüche, **dadurch gekennzeichnet, dass** das Verfahren den Schritt:
Bereitstellung zumindest eines vierten Datensatzes (14), wobei der zumindest eine vierte Datensatz (14) - aus Messungen gewonnene und/oder aus Vorhersagen ermittelte - Niederschlagsdaten mit aktuellen und/oder in der Zukunft zu erwartenden Niederschlagsmengen, die jeweils geographischen Positionsdaten (10) innerhalb des Untersuchungsgebietes (1) zugeordnet sind,
umfasst, und dass im Schritt (d) die ortsabhängige Ermittlung des Eintritts und/oder des Ausmaßes eines Schadensereignisses (2) und/oder Berechnung der Wahrscheinlichkeit für den Eintritt und/oder ein Ausmaß eines Schadensereignisses (2) auch in Abhängigkeit der Niederschlagsdaten des zumindest einen vierten Datensatzes (14) erfolgt.

5. Verfahren nach einem der vorhergehenden Ansprüche, **dadurch gekennzeichnet, dass** aus den Niederschlagsdaten des zumindest einen ersten Datensatzes (11) und den bodenbezogenen und/oder orographischen Daten des zumindest einen zweiten Datensatzes (12) die Bodenfeuchte und/oder der Sättigungsgrad des Bodens ortsabhängig ermittelt und geographischen Positionsdaten (10) innerhalb des Untersuchungsgebietes (1) zugeordnet wird/werden.

6. Verfahren nach Anspruch 5, **dadurch gekennzeichnet, dass** die Bodenfeuchte und/oder der Sättigungsgrad des Bodens unter Berücksichtigung der Niederschlagszufuhr, der Infiltration, der Evapotranspiration und/oder des Abflusses und/oder mittels einer Simulation der Wasserbewegung innerhalb des Bodens ermittelt wird.

7. Verfahren nach Anspruch 5 oder 6, **dadurch gekennzeichnet, dass** die ortsabhängig ermittelte Bodenfeuchte und/oder Sättigungsgrad des Bodens mit den Schadensereignis-Daten des zumindest einen dritten Datensatzes (13) verglichen wird,
wobei vorzugsweise zumindest ein fünfter Datensatz (15) generiert wird, in dem ortsabhängig die Schadenereignis-Daten des zumindest einen dritten Datensatzes (13) jeweils der Bodenfeuchte und/oder dem Sättigungsgrad des Bodens an der jeweiligen geographischen Position des Schadenereignisses (2) zugeordnet sind.

8. Verfahren nach einem der vorhergehenden Ansprüche, **dadurch gekennzeichnet, dass** das Verfahren den Schritt:
Erstellen eines Ergebnis-Datensatzes (16), in dem ortsabhängig einer - vorzugsweise über einen vorgegebenen Zeitraum angesammelten - Niederschlagsmenge der Eintritt und/oder ein Ausmaß eines Schadensereignisses (2) und/oder eine Wahrscheinlichkeit
für den Eintritt und/oder ein Ausmaß eines Schadensereignisses (2) zugeordnet ist, umfasst.

9. Verfahren nach einem der vorhergehenden Ansprüche, **dadurch gekennzeichnet, dass** das Verfahren den Schritt:
Erstellen zumindest einer digitalen Karte (8), in der der Eintritt und/oder das Ausmaß des Schadensereignisses (2) und/oder die Wahrscheinlichkeit für den Eintritt und/oder das Ausmaß eines Schadensereignisses (2) an der ermittelten geographischen Position eingetragen ist,
und/oder
Erstellen zumindest einer digitalen Karte (8), in der die ortsabhängig ermittelte Bodenfeuchte und/oder Sättigungsgrad des Bodens eingetragen ist und/oder in der die - vorzugsweise über einen vorgegebenen Zeitraum angesammelte - Niederschlagsmenge eingetragen ist.
umfasst.

10. Verfahren nach einem der vorhergehenden Ansprüche, **dadurch gekennzeichnet, dass** die bodenbezogenen und/oder orographischen Daten des zweiten Datensatzes (12)
Daten über die Korngröße und/oder die Porengröße und/oder die Bodentextur und/oder die Bodenart und/oder einen Vegetationsindex und/oder die Wasserspeicherfähigkeit
und/oder
Daten über lokale orographische Gegebenheiten, insbesondere die Geländeform
und/oder Höhenunterschiede und/oder natürliche und/oder künstliche Abflüsse, umfassen.

11. Verfahren nach einem der vorhergehenden Ansprüche, **dadurch gekennzeichnet, dass** - wenn die Ermittlung und/oder Berechnung in Schritt (d) ergibt, dass ein Schadensereignis (2) eintritt und/oder das Ausmaß des Schadensereignisses und/oder die Wahrscheinlichkeit für den Eintritt und/oder ein Ausmaß eines Schadensereignisses (2) einen - vorzugweise von einem Benutzer vorgebbaren - Grenzwert überschreitet, das Ergebnis der Ermittlung und/oder Berechnung - vorzugsweise in Form einer digitalen Karte (8) und/oder eines Textes und/oder einer Warnung - automatisch an einer Benutzerschnittstelle (6) ausgegeben und/oder automatisch mittels einer elektronischen Nachrichtenversandeinrichtung (7) versendet wird.

12. Verfahren nach einem der vorhergehenden Ansprüche, **dadurch gekennzeichnet, dass** der Algorithmus (5) ein konfigurierbarer und/oder selbstlernender und/oder auf künstlicher Intelligenz basierender Algorithmus ist.

13. Verfahren nach einem der vorhergehenden Ansprüche, **dadurch gekennzeichnet, dass** das Datenverarbeitungssystem (3) zumindest einen Server und/oder zumindest ein tragbares Gerät, vorzugsweise ein Smartphone oder ein Tablett, umfasst.

14. Verfahren nach einem der vorhergehenden Ansprüche, **dadurch gekennzeichnet, dass** das Datenverarbeitungssystem (3) zumindest eine Messeinrichtung (17) zur Messung einer Niederschlagsmenge und/oder zumindest eine Messeinrichtung (18) zur Messung einer bodenbezogenen Größe umfasst.

15. Verfahren nach einem der vorhergehenden Ansprüche, **dadurch gekennzeichnet, dass** die im Schritt (d) durchgeführte Ermittlung und/oder Berechnung derart erfolgt, dass aus den Niederschlagsdaten des ersten Datensatzes (11) und den bodenbezogenen und/oder orographischen Daten des zweiten Datensatzes (12) ein Zwischenergebnis, vorzugsweise in Form einer/-s ortsabhängig ermittelten Bodenfeuchte und/oder Sättigungsgrades des Bodens und/oder in Form einer Wahrscheinlichkeit für den Eintritt und/oder ein Ausmaß eines Schadensereignisses (2), ermittelt wird und dass das Zwischenergebnis mit den Schadensereignis-Daten des dritten Datensatzes (13) gewichtet wird, wobei an jenen geographischen Positionsdaten (10), an denen in der Vergangenheit zumindest ein Schadensereignis (2) eingetreten ist und/oder Schadensereignisse (2) ein hohes Ausmaß hatten, eine stärkere Gewichtung des Zwischenergebnisses erfolgt als an geographischen Positionsdaten (10), an denen in der Vergangenheit keine Schadensereignisse (2) eingetreten sind und/oder Schadensereignisse (2) ein geringes Ausmaß hatten.

16. Verfahren zur Abwendung und/oder Verringerung des Ausmaßes von Schadenereignissen aufgrund von Niederschlägen, insbesondere Überflutungen, Erdrutschen und/oder Muren,
bei dem - gemäß einem Verfahren nach einem der vorhergehenden Ansprüche - ortsabhängig und/oder zeitabhängig der Eintritt und/oder das Ausmaß eines Schadensereignisses (2) ermittelt und/oder eine Wahrscheinlichkeit für den Eintritt und/oder ein Ausmaß eines Schadensereignisses (2) berechnet wird
und in Abhängigkeit des Ergebnisses der in Schritt (d) durchgeführten Ermittlung und/oder Berechnung, insbesondere wenn die Ermittlung und/oder Berechnung in Schritt (d) ergibt, dass ein Schadensereignis (2) eintritt und/oder das Ausmaß des Schadensereignisses (2) und/oder die Wahrscheinlichkeit für den Eintritt und/oder ein Ausmaß eines Schadensereignisses (2) einen - vorzugweise von einem Benutzer vorgebbaren - Grenzwert überschreitet, - vorzugsweise automatisch - zumindest eine Maßnahme zur Abwendung und/oder Verringerung des Ausmaßes eines Schadensereignisses (2) getroffen wird,
wobei vorzugsweise die zumindest eine Maßnahme zur Abwendung und/oder Verringerung des Ausmaßes eines Schadensereignisses (2) die automatische Ansteuerung zumindest eines Aktors (19), insbesondere eines Antriebs einer Schleuse, einer Barriere und/oder Staumauer, und/oder die automatische Alarmierung (20) von Einsatzkräften umfasst.

17. Algorithmus (5) zur ortsabhängigen und/oder zeitabhängigen Ermittlung und/oder Abschätzung eines Eintritts und/oder Ausmaßes von Schadensereignissen (2) aufgrund von Niederschlägen, insbesondere Überflutungen, Erdrutschen und/oder Muren, in einem Untersuchungsgebiet (1), wobei der Algorithmus (5) die Schritte eines Verfahrens nach einem der vorhergehenden Ansprüche aufweist.

18. Datenverarbeitungssystem (3) und/oder auf einem Datenträger (21) gespeichertes Computerprogrammprodukt, zur ortsabhängigen Ermittlung und/oder Abschätzung eines Eintritts und/oder Ausmaßes von Schadensereignissen (2) aufgrund von Niederschlägen, insbesondere Überflutungen, Erdrutschen und/oder Muren, in einem Untersuchungsgebiet, wobei in dem Datenverarbeitungssystem (3) und/oder in dem Computerprogrammprodukt ein Algorithmus (5) nach Anspruch 17 hinterlegt ist.

19. Datenverarbeitungssystem nach Anspruch 18, **dadurch gekennzeichnet, dass** das Datenverarbeitungssystem (3) eine erste Eingangsschnittstelle und/oder eine erste Speichersektion zum Empfangen und/oder zum Speichern des ersten Datensatzes (11), eine zweite Eingangsschnittstelle und/oder eine zweite Speichersektion zum Empfangen und/oder zum Speichern des zweiten Datensatzes (12), eine dritte Eingangsschnittstelle und/oder eine dritte Speichersektion zum Empfangen und/oder zum Speichern des dritten Datensatzes (13), und eine - den Algorithmus (5) enthaltende - Datenverarbeitungssektion zum Zusammenführen des ersten Datensatzes (11), des zweiten Datensatzes (12) und des dritten Datensatzes (13) umfasst.
